# EUROPEAN PATENT SPECIFICATION

(11) **EP 1 262 515 B1**
(45) Date of publication and mention of the grant of the patent: **04.08.2004**
(21) Application number: 01307878.7
(22) Date of filing: 17.09.2001
(51) Int. Cl.: C08L 9/00, A63B 37/00

(54) **Golf ball**
Golfball
Balle de golf

(30) Priority: 30.05.2001 JP 2001163003
(43) Date of publication of application: 04.12.2002
(73) Proprietor: BRIDGESTONE SPORTS CO., LTD., Tokyo (JP)
(72) Inventor: Higuchi, Hiroshi, Bridgestone Sports Co., Ltd., Chichibu-shi, Saitama-ken (JP); Nanba, Atsushi, Bridgestone Sports Co., Ltd., Chichibu-shi, Saitama-ken (JP)
(74) Representative: Stoner, Gerard Patrick

(56) References cited:
- EP-A- 0 386 915
- EP-A- 0 920 886
- US-A- 4 683 257
- PATENT ABSTRACTS OF JAPAN vol. 2000, no. 05, 14 September 2000 (2000-09-14) & JP 2000 042141 A (SUMITOMO RUBBER IND LTD), 15 February 2000 (2000-02-15)

## Description

### BACKGROUND

The present invention relates to golf balls with particular reference to achieving resilience while maintaining workability of the ball materials.

### Prior Art

Conventionally, to give excellent resilience to a golf ball, various attempts have been made to improve the composition of a polybutadiene used as a main rubber for the golf ball.

For example, Japanese Patent Laid-open No. Sho 62-89750 and US 4683257 has proposed a rubber composition for a solid golf ball, which contains, as a main rubber, a polybutadiene having a Mooney viscosity ranging from 70 to 100 and synthesized by using an Ni or Co catalyst and a polybutadiene having a Mooney viscosity ranging from 30 to 90 and synthesized by using a lanthanum-based catalyst or a polybutadiene having a Mooney viscosity ranging from 20 to 50 and synthesized by using an Ni or Co catalyst.

The above-described golf ball, however, presents some difficulties in terms of workability at the time of extrusion of the rubber composition and resilience of the ball.

Japanese Patent Laid-open No. Hei 2-268778 has proposed a golf ball, which is produced from a rubber composition containing a polybutadiene having a Mooney viscosity of less than 50 and synthesized by using a group VIII element catalyst and a polybutadiene having a Mooney viscosity of less than 50 and synthesized by using a lanthanide catalyst. The golf ball thus obtained, however, is poor in resilience.

Japanese Patent Laid-open No. Hei 11-70187 has proposed a multi-piece solid golf ball including an intermediate layer made from a polybutadiene having a low Mooney viscosity; Japanese Patent Laid-open No. Hei 11-319148 has proposed a solid golf ball produced from a rubber composition containing a polybutadiene having a Mooney viscosity ranging from 50 to 60 and synthesized by using an Ni or Co catalyst and a polybutadiene having a Mooney viscosity ranging from 20 to 90 and synthesized by using lanthanoid based catalyst; Japanese Patent Laid-open No. Hei 11-164912 has proposed a solid golf ball produced from a rubber composition in which the amount of 1,2-vinyl bonds is in a range of 2.0% or less and a ratio (Mw/Mn) of a weight-average molecular weight to a number-average molecular weight is in a range of 3.5 or less; Japanese Patent Laid-open No. Sho 63-275356 has proposed a golf ball produced from a rubber composition containing a polybutadiene having a high Mooney viscosity; and Japanese Patent Laid-open No. Hei 3-151985 has proposed a golf ball produced from a rubber composition containing a polybutadiene having a high number-average molecular weight and a polybutadiene having a low number-average molecular weight. JP 10-210837 describes a thread wound golf ball made from a two component polybutadiene composition containing a polybutadiene synthesised using a Ni catalyst and having a Mooney viscosity of 50 to 100, and a polybutadiene synthesised using a lanthanoid catalyst and having a Mooney viscosity of 20 to 90. However these golf balls do not succeed in combining good workability at the time of extrusion of the rubber composition with good resilience in the ball.

In view of the foregoing, the present inventor has earnestly examined and found that a golf ball including, as a composing element, a hot-molded product obtained from a rubber composition, the rubber composition including a polybutadiene obtained by mixing a polybutadiene (a) with a polybutadiene (b) at a mass ratio [(a)/(b)] ranging from 70/30 to 10/90; an unsaturated carboxylic acid and/or a metal salt thereof; and an organic peroxide; wherein said polybutadiene (a) contains 60% or more of cis-1,4-bonds and has a Mooney viscosity [ML₁₊₄(100°C)] of 10 or more and 48 or less, and is synthesized by using a group VIII element catalyst, and said polybutadiene (b) contains 60% or more of cis-1,4-bonds and has a Mooney viscosity [ML₁₊₄(100° C)] of 50 or more, and is synthesized by using a rare earth element based catalyst, is advantageous due to a synergism effect of a polybutadiene obtained by mixing two kinds of polybutadienes at a specific ratio and the essential components. In general, a material having a high Mooney viscosity and thereby having a high resilience is poor in moldability, that is, workability in extrusion of a rubber which has been kneaded, whereas a material having a low Mooney viscosity is good in moldability in extrusion of a rubber which has been kneaded but is poor in resilience of the ball. The above-described rubber composition examined by the present inventor can solve such an inconsistent problem. That is to say, the present inventor has found that the above-described rubber composition is good in moldability in extrusion after kneading and also good in resilience of the ball, and thereby a molded product excellent in resilience can be obtained from the rubber composition with good workability, and that a golf ball having excellent resilience can be produced by using the molded product thus obtained as a composing element of the ball.

Accordingly, the present invention provides the following golf balls:
(1) A golf ball including, as a composing element, a hot-molded product obtained from a rubber composition, said rubber composition including:
   a polybutadiene obtained by mixing a polybutadiene (a) with a polybutadiene (b) at a mass ratio [(a)/(b)] ranging from 70/30 to 10/90;
   an unsaturated carboxylic acid and/or a metal salt thereof; and
   an organic peroxide;
   wherein said polybutadiene (a) contains 60% or more of cis-1,4-bonds and has a Mooney viscosity [ML₁₊₄(100°C)] of 10 or more and 48 or less, and is synthesized by using a group VIII element catalyst, and said polybutadiene (b) contains 60% or more of cis-1,4-bonds and has a Mooney viscosity [ML₁₊₄(100° C)] of 50 or more, and is synthesized by using a rare earth element based catalyst.
(2) A golf ball according to (1) above, wherein said golf ball is either a one-piece golf ball or a golf ball including a solid core or a solid center, and a flexural amount of said one-piece solid golf ball, solid core, or solid center, measured by applying a load of 980 N (100 kg) thereto, is in a range of 2.0 to 6.0 mm.
(3) A golf ball according to (1) or (2) above, wherein letting a weight-average molecular weight be Mw (×10⁴), a number-average molecular weight be Mn (×10⁴), , and a ratio of the weight-average molecular weight to the number-average molecular weight be Mw/Mn, the ratio Mw/Mn of said component (a) is in a range of 3.0 to 6.0, and the Mw/Mn of said component (b) is in a range of 2.0 to 4.0.

Methods of making the disclosed golf balls comprising moulding the mentioned rubber compositions, optionally including the blending of the rubber compositions from the mentioned polybutadienes, are further aspects of the invention.

A golf ball of the present invention includes a hot-molded product obtained from a rubber composition. The rubber composition contains, as a main rubber, a polybutadiene component obtained by mixing a polybutadiene (a) with a polybutadiene (b). The polybutadiene (a) contains 60% or more of cis-1,4-bonds and has a Mooney viscosity [ML₁₊₄(100°C)] of 10 or more and 48 or less, and is synthesized by using a group VIII element catalyst. The polybutadiene (b) contains 60% or more of cis-1,4-bonds and has a Mooney viscosity [ML₁₊₄(100° C)] of 50 or more, and is synthesized by using a rare earth element based catalyst.

The polybutadiene component (a) is added to improve the workability, and is required to contain the cis-1,4-bonds in an amount of 60% or more, preferably, 80% or more, more preferably, 90% or more, most preferably, 95% or more. If the amount of the cis-1,4-bonds is excessively small, the resilience is reduced.

The Mooney viscosity [ML₁₊₄(100°C)] of the polybutadiene component (a) is required to be in a range of 10 or more, preferably, 20 or more, more preferably, 25 or more, most preferably, 30 or more, with the upper limit being in a range of 48 or less, more preferably, 46 or less, most preferably, 44 or less.

The Mooney viscosity used herein is an industrial index of viscosity measured by a Mooney viscometer which is one kind of a rotary plastimeter under JIS-K6300. The Mooney viscosity is expressed in ML₁₊₄(100°C), where M indicates the Mooney viscosity, L indicates a large rotor (L-type) of the plastimeter, "(1+4)" indicates that a preheating time is one minute and a rotational time of the rotor is four minutes, and "100°C" indicates a measurement temperature.

The polybutadiene component (a) is required to be synthesized by using a group VIII element catalyst, for example, a nickel based catalyst or a cobalt based catalyst.

Examples of the nickel based catalysts may include a one-component type such as nickel diatomaceous earth; a two-component type such as Raney-nickel/titanium tetrachloride; and a three-component type such as a nickel compound/organic metal/boron trifluoride etherate. Examples of nickel compounds may include reduced nickel with carrier, Raney-nickel, nickel oxide, nickel carboxylate, and a complex salt of organic nickel. Examples of the organic metals may include a trialkyl aluminum such as triethyl aluminum, tri-n-propyl aluminum, tri-isobutyl aluminum, or tri-n-hexyl aluminum; an alkyl lithium such as n-butyl lithium, sec-butyl lithium, tert-butyl lithium, or 1,4-dibutane lithium; and a dialkyl zinc such as diethyl zinc or dibutyl zinc.

Examples of the cobalt based catalysts may include, as cobalt and compounds thereof, Raney-cobalt, cobalt chloride, cobalt bromide, cobalt iodide, cobalt oxide, cobalt sulfate, cobalt carbonate, cobalt phosphate, cobalt phthalate, cobalt carbonyl, cobalt acetylacetonate, cobalt diethyl dithiocarbamate, cobalt anilinium nitrite, and cobalt dinitrosyl chloride. In particular, each of these compounds is preferably combined with a dialkyl aluminum monochloride such as diethyl aluminum monochloride or diisobutyl aluminum monochloride, a trialkyl aluminum such as triethyl aluminum, tri-n-propyl aluminum, triisobutyl aluminum or tri-n-hexyl aluminum, an aluminum alkyl sesquichloride such as ethyl aluminum sesquichloride, or aluminum chloride.

The polymerization of butadiene monomers by using the above group VIII element based catalyst, particularly, a nickel or cobalt based catalyst can be generally performed by continuously charging the butadiene monomers and the catalyst, together with a solvent, in a reaction chamber, and subjecting them to reaction by suitably selecting a reaction temperature in a range of 5 to 60°C and a reaction pressure in a range of atmospheric pressure to 70 and several atm so as to obtain the above-described Mooney viscosity.

It is generally preferred that with respect to the polybutadiene component (a), letting a weight-average molecular weight be Mw (×10⁴), a number-average molecular weight be Mn (×10⁴), a ratio (Mw/Mn) of the weight-average molecular weight to the number-average molecular weight may be in a range of 3.0 or more, preferably, 3.3 or more, more preferably, 3.6 or more, most preferably, 3.9 or more, with the upper limit being in a range of 6.0 or less, preferably, 5.5 or less, more preferably, 5.0 or less, most preferably, 4.5 or less. If the ratio Mw/Mn is excessively small, the workability is less, and if excessively large, the resilience is reduced.

To enhance the resilience, the polybutadiene component (b) is required to contain cis-1,4-bonds in an amount of 60% or more, preferably, 80% or more, more preferably, 90% or more, most preferably, 95% or more. If the amount of the cis-1,4-bonds is excessively small, the resilience is reduced.

The Mooney viscosity [ML₁₊₄(100°C)] of the polybutadiene component (b) is required to be in a range of 50 or more, preferably, 52 or more, more preferably, 55 or more, still more preferably, 60 or more, most preferably, 65 or more, with the upper limit being in a range of less than 140, preferably, 120 or less, more preferably, 100 or less.

The polybutadiene component (b) of the present invention is required to be synthesized by using a rare earth element based catalyst, or other as set out below.

As such a catalyst, there can be used a known type such as lanthanide series rare earth element compbund, an organic aluminum compound, alumoxane, a halogen containing compound, or a combination thereof with a Lewis base.

Examples of the lanthanide series rare earth element compounds may include a halide, a carboxylate, an alcoholate, a thioalcoholate, and an amide of a metal having an atomic number of 57 to 71.

As the organic aluminum compound, there can be used a compound expressed, for example, by AIR¹R²R³ (R¹, R² and R³ may be identical to each other or different from each other, and each of R¹, R² and R³ is a residual hydrocarbon group having the hydrogen or carbon number of 1 to 8).

As the alumoxane, there is preferably used a compound having a structure expressed by the following chemical formula (1) or (2):

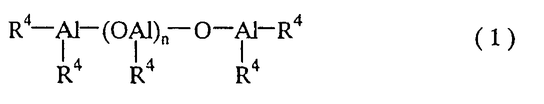

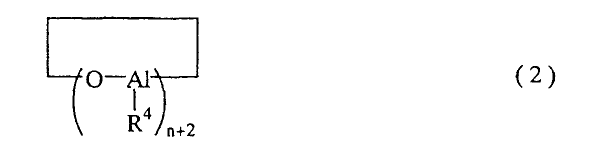

In each chemical formula, R⁴ is a hydrocarbon group containing carbon atoms of the carbon number of 1 to 20, and n is an integer of 2 or more.

In addition, an associated body of an alumoxane as described in "Fine Chemical, 23, (9), 5 (1994)", "J. Am. Chem. Soc., 115, 4971 (1993)", or "J. Am, Chem. Soc., 117, 6465 (1995)" may be used.

As the halogen containing compound, there can be used an aluminum halide expressed by AlXₙR₃₋ₙ (X is a halogen, R is a residual hydrocarbon group having the carbon number of 1 to 20, for example, an alkyl group, aryl base, or aralkyl base, and n is 1, 1.5, 2 or 3), a strontium halide such as Me₃SrCl, Me₂SrCl₂, MeSrHCl₂, MeSrCl₃, or a metal halide such as silicon tetrachloride, tin tetrachloride, or titanium tetrachloride.

The Lewis base can be used for complexing the lanthan series rare earth element compound. For example, acethyl acetone or ketone alcohol can be used as the Lewis base.

In particular we note that the use of a neodymium base catalyst using a neodymium compound as the lantern series rare earth element compound advantageously allows production of a polybutadiene containing a large amount of the cis-1,4-bonds and a small amount of the 1,2-vinyl bonds with an excellent polymerization activity. The concrete example of such rare earth element based catalyst has been described in Japanese Patent Laid-open No. Hei 11-35633.

For the catalytic polymerization of butadiene monomers e.g. by rare earth element catalyst, a solvent may be used, or any solvent may be not used. In the latter case, butadiene monomers may be subjected to bulk polymerization or a vapor-phase polymerization. The polymerization temperature may be in a range of 30 to 150°C, preferably, 10 to 100°C.

The polybutadiene component (b) of the present invention may be obtained by polymerization using a catalyst as specified above followed by reaction of active terminals of the polymer with a terminal denaturant.

As the terminal denaturants, there can be used e.g. the following known compounds (1) to (6):
(1) A halogenated organic metal compound, a halogenated metal compound, or an organic metal compound expressed by R⁵ₙM'X₄₋ₙ, M'X₄, M'X₃, R⁵ₙM' (-R⁶-COOR⁷)_{4-n'} or R⁵ₙM'(-R⁶-COR⁷)₄₋ₙ (in the chemical formula, R⁵ and R⁶ may be identical to each other or different from each other, and each of R⁵ and R⁶ is a hydrocarbon group containing carbon atoms of the carbon number of 1 to 20; R⁷ is a hydrocarbon group containing carbon atoms of the carbon number of 1 to 20, which may contain a carbonyl group or ester group at a side chain; M' is a tin atom, silicon atom, germanium atom, or phosphorus atom; X is a halogen atom; and n is 0 or an integer selected from 1 to 3).
(2) A heterocumulene compound containing, in molecules, Y=C=Z bonds (in the formula, Y is a carbon atom, oxygen atom, nitrogen atom, or sulfur atom; Z is an oxygen atom, nitrogen atom, or sulfur atom).
(3) A hetero-tricyclic compound containing, in molecules, bonds expressed by the following chemical formula: 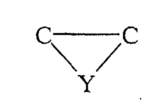
   In the chemical formula, Y is an oxygen atom, nitrogen atom, or sulfur atom.
(4) A halogenated isocyano compound.
(5) R⁸-(COOH)ₘ, R⁹(COX)ₘ, R¹⁰-(COO-R¹¹), R¹²-OCOO-R¹³, R¹⁴-(COOCO-R¹⁵)ₘ, or a carboxylic acid, an acid halide, an ester compound, a carbonic ester compound, or an acid anhydride, which is expressed by the following chemical formula: 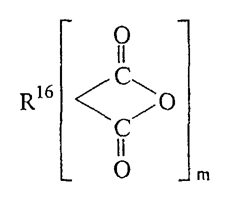
   In the formula, R⁸ to R¹⁶ may be identical to each other or different from each other, and each of R⁸ to R¹⁶ is a hydrocarbon group containing carbon atoms of the carbon number of 1 to 50, X is a halogen atom, and m is an integer selected from 1 to 5.
(6) R¹⁷₁, M"(OCOR¹⁸)₄₋₁, R¹⁹₁M" (OCO-R²⁰-COOR ²¹)₄₋₁, or a metal salt of a carboxylic acid expressed by the following chemical formula:

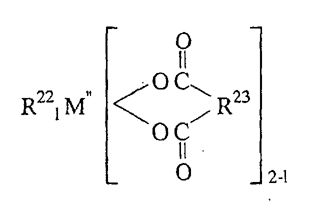

In the chemical formula, R¹⁷ to R²³ may be identical to each other or different from each other, and each of R¹⁷ to R²³ is a hydrocarbon group containing carbon atoms of the carbon number of 1 to 20, M" is a tin atom, silicon atom, or germanium atom, 1 is 0 or an integer selected from 1 to 3.

A concrete example of the terminal denaturant shown in each of the above items (1) to (6) and a method of allowing the terminal denaturant to react with active terminals of a polymer have been disclosed, for example, in Japanese Patent Laid-open Nos. Hei 11-35633 and Hei 7-268132.

It is generally preferred that with respect to the polybutadiene component (b), letting a weight-average molecular weight be Mw (×10⁴), a number-average molecular weight be Mn (×10⁴), a ratio (Mw/Mn) of the weight-average molecular weight to the number-average molecular weight may be in a range of 2.0 or more, preferably, 2.2 or more, more preferably, 2.4 or more, most preferably, 2.6 or more, with the upper limit being in a range of 4.0 or less, preferably, 3.8 or less, more preferably, 3.6 or less, most preferably, 3.4 or less. If the ratio Mw/Mn is excessively small, the workability is less, and if excessively large, the resilience may be reduced.

A base rubber for the present rubber composition can be obtained by mixing a specific amount of the polybutadiene component (a) with a specific amount of the polybutadiene component (b). The added amount of the polybutadiene component (a) may be in a range of 10 parts by mass or more, preferably, 20 parts by mass or more, more preferably, 30 parts by mass or more, with the upper limit being in a range of 70 parts by mass or less, preferably, 60 parts by mass or less, more preferably, 55 parts by mass or less, most preferably, 50 parts by mass or less. The added amount of the polybutadiene component (b) may be in a range of 90 parts by mass or less, preferably, 80 parts by mass or less, more preferably, 70 parts by mass or less, with the lower limit being in a range of 30 parts by mass or more, preferably, 40 parts by mass or more, more preferably, 45 parts by mass or more, most preferably, 50 parts by mass or more. These proportions enable workability in extrusion of the rubber composition to be combined with resilience of the molded product.

If wished or needed, other diene based rubber, such as styrene-butadiene rubber (SBR), natural rubber, isoprene rubber, or ethylene-propylene-diene rubber (EPDM) may be suitably mixed in the above main rubber.
Usually this will be in an amount less than the amount of the mentioned polybutadiene blend. Thus, the base rubber may for example consist essentially of the mentioned blend, so that the parts may be mass%. Or, when other rubber is present, the above parts ranges may be taken individually in relation to 100 parts total rubber, although also (independently) as proportions of (a) to (b) within the total rubber.

In addition to the base rubber containing the polybutadiene component (a) and the polybutadiene component (b), an unsaturated carboxylic acid and/or a metal salt thereof and an organic peroxide are in the composition. Such a rubber composition exhibits an excellent moldability in extrusion of the rubber composition, and a hot-molded product thus obtained from the rubber composition is excellent in resilience, with a result that a golf ball including the hot-molded product becomes excellent in resilience.

Examples of the unsaturated carboxylic acids may include acrylic acid, metacrylic acid, maleic acid, fumaric acid. In particular, acrylic acid and metacrylic acid are preferably used.

Examples of the metal salts of unsaturated carboxylic acids may include zinc salts and magnesium salts of unsaturated aliphatic acids, for example, zinc metacrylate and zinc acrylate. In particular, zinc acrylate is preferably used.

The content of the unsaturated carboxylic acid and/or metal salt thereof may be set, on the basis of 100 parts by mass of the main rubber, in a range of 10 parts by mass or more, preferably, 15 parts by mass or more, more preferably, 20 parts by mass or more, with the upper limit being in a range of 60 parts by mass or less, preferably, 50 parts by mass or less, more preferably, 45 parts by mass or less, most preferably, 40 parts by mass or less. If the content is excessively small, the resilience is reduced, and if excessively large, the golf ball becomes excessively hard, which may make player's feeling of hitting of the golf ball undesirable.

As the organic peroxide, there can be used a commercial product such as "Percumyl D" (sold by NOF CORPORATION), "Perhexa 3M" (sold by NOF CORPORATION), "Luperco 231XL" (sold by Elf Atochem Japan). Two kinds or more organic peroxides may be used in combination as needed.

The content of the organic peroxide may be set, on the basis of 100 parts by mass of the main rubber, in a range of 0.1 part by mass or more, preferably, 0.3 part by mass or more, more preferably, 0.5 part by mass or more, most preferably, 0.7 part by mass or more, with the upper limit being in a range of 5 parts by mass or less, preferably, 4 parts by mass or less, more preferably, 3 parts by mass or less, most preferably, 2 parts by mass or less. If the content is excessively large or small, the resilience, player's feeling of hitting the golf ball, and durability may be degraded.

In addition to the above-described essential components, an inorganic filler can be added to the rubber composition of the present invention for adjusting the specific gravity, as needed. Examples of the inorganic fillers may include zinc oxide, barium sulfate, and calcium carbonate. In order to obtain a suitable weight and desirable resilience, the content of the inorganic filler may be set, on the basis of 100 parts by mass of the main rubber, in a range of 1 part by mass or more, preferably, 3 parts by mass or more, more preferably, 5 parts by mass or more, most preferably, 7 parts by mass or more, with the upper limit being in a range of 130 parts by mass or less, preferably, 50 parts by mass or less, more preferably, 45 parts by mass or less, most preferably, 40 parts by mass or less.

An antioxidant may be further added to the rubber composition of the present invention, as needed. As the antioxidant, there can be used a commercial product such as "NOCRAC NS-6, NS-30" (sold by Ouchi-Sinko Chemical Industrial Co., Ltd.), or "Yoshinox 425" (Yoshitomi Pharmaceutical Co., Ltd.). In order to obtain desirable resilience and durability, the content of the antioxidant may be set, on the basis of 100 parts by mass of the main rubber, in a range of 0 part by mass or more, preferably, 0.05 part by mass or more, more preferably, 0.1 part by mass or more, most preferably, 0.2 part by mass or more, with the upper limit being in a range of 3 parts by mass or less, preferably, 2 parts by mass or less, more preferably, 1 part by mass or less, most preferably, 0.5 part by mass or less.

The rubber composition of the present invention can further contain an organic sulfur compound. Examples of the organic sulfur compounds may include thiophenol, thionaphthol, halogenated thiophenol, or metal salts thereof, more concretely, zinc salts of pentachlorothiophenol, pentafluorothiophenol, pentabromothiophenol, and parachlorothiophenol; and diphenyl polysulfide, dibenzil polysulfide, dibenzoil polysulfide, dibenzothiazoil polysulfide, and dithiobenzoil polysulfide, each of which has the sulfur number of 2 to 4. In particular, a zinc salt of pentachlorothiophenol or diphenyl disulfide is preferably used. The content of the organic sulfur compound may be set, on the basis of 100 parts by mass of the main rubber, in a range of 0.1 part by mass or more, preferably, 0.2 part by mass or more, more preferably, 0.5 part by mass or more, with the upper limit being in a range of 5 parts by mass or less, preferably, 4 parts by mass or less, more preferably, 3 parts by mass or less, most preferably, 2 parts by mass or less.

The hot-molded product can usually be obtained by vulcanizing and heating the above-described rubber composition by a known process. For example, a vulcanizing temperature may be set in a range of 100 to 200°C, and a vulcanizing time be set in a range of 10 to 40 min.

The hardness of the hot-molded product can be suitably adjusted in accordance with the usage form (to be described later) of a golf ball, and is not particularly limited. For example, the sectional hardness of the hot-molded product may be uniform from the center to the surface of the molded-product, or a difference in sectional hardness may be present between the center and the surface of the molded-product.

The golf ball of the present invention can be used in any one of various forms to be described later. In particular, in the case where the golf ball of the present invention is a one-piece golf ball or a golf ball including a solid core or solid center, a flexural amount of the one-piece solid golf ball, solid core, or solid center, measured by applying a load of 980 N (100 kg) thereto, may be in a range of 2.0 mm or more, preferably, 2.5 mm or more, more preferably, 2.8 mm or more, most preferably, 3.2 mm or more, with the upper limit being in a range of 6.0 mm or less, preferably, 5.5 mm or less, more preferably, 5.0 mm or less, most preferably, 4.5 mm or less. If the flexural amount, that is, the deformed amount is excessively small, player's feeling of hitting the golf ball becomes worse, and particularly, the spin of the ball becomes excessively high at the time of long-shot with a driver when the ball is liable to be largely deformed, to reduce the carry of the ball, and if the deformed amount is excessively large, that is, if the golf ball becomes excessively soft, player's feeling of hitting the ball becomes dull, the carry of the ball is reduced because of insufficient resilience, and durability against cracking due to repeated hitting may become worse.

The golf ball of the present invention is characterized by including the above hot-molded product as a composing element, and the form of the ball is not particularly limited. To be more specific, the golf ball of the present invention may be any of a one-piece golf ball in which the hot-molded product is directly applied to the golf ball, a two-piece solid golf ball in which the hot-molded product is used as a solid core on the surface of which a cover is formed, a multi-piece solid golf ball having three-pieces or more in which the hot-molded product is used as a solid core on the surface of which two or more cover layers are formed, and a bobbin type golf ball in which the hot-molded product is used as a center core. In particular, from the viewpoint of making effective use of the hot-molded product to improve the moldability in extrusion of the rubber composition and give excellent resilience to the ball, the golf ball of the present invention is preferably used in the form of a two-piece solid golf ball or a multi-piece solid golf ball.

Preferably, in the case of using the hot-molded product as a solid core, the diameter of the solid core may be in a range of 30.0 mm or more, preferably, 32.0 mm or more, more preferably, 35.0 mm or more, most preferably, 37.0 mm or more, with the upper limit being in a range of 41.0 mm or less, preferably, 40.5 mm or less, more preferably, 40.0 mm or less, most preferably, 39.5 mm or less. In particular, the diameter of the solid core used for a two-piece solid golf ball may be in a range of 37.0 mm or more, preferably, 37.5 mm or more, more preferably, 38.0 mm or more, most preferably, 38.5 mm or more, with the upper limit being in a range of 41.0 mm or less, preferably, 40.5 mm or less, more preferably, 40.0 mm or less; and the diameter of the solid core used for a three-piece solid golf ball may be in a range of 30.0 mm or less, preferably, 32.0 mm or less, more preferably, 34.0 mm or more, most preferably, 35.0 mm or more, with the upper limit being in a range of 40.0 mm or less, preferably, 39.5 mm or less, more preferably, 39.0 mm or less.

The specific gravity of the solid core may be in a range of 0.9 or more, preferably, 1.0 or more, more preferably, 1.1 or more, with the upper limit being in a range of 1.4 or less, preferably, 1.3 or less, more preferably, 1.2 or less.

In the case where the golf ball of the present invention is applied to a two-piece solid golf ball or a multi-piece solid golf ball, the golf ball can be produced by putting a solid core formed of the hot-molded product, and injecting-molding or press-molding a known cover material, or a known cover material and a known intermediate layer material on the solid core.

As a main material of each of the cover material and intermediate layer material, there may be used a thermoplastic or thermosetting polyurethane based elastomer, a polyester based elastomer, an ionomer resin, a polyolefine based elastomer, or a mixture thereof. These materials may be used singly or in combination of two kinds or more. In particular, the thermoplastic polyurethane elastomer or ionomer resin is preferably used.

As the thermoplastic polyurethane based elastomer, there can be used a commercial product such as an elastomer containing aliphatic or aromatic diisocyanate, for example, "Pandex T7298, T7295, T7890, TR3080, T8295, or T8290" (sold by DIC-Bayer Polymer Co., Ltd.). As the ionomer resin, there can be used a commercial product such as "Surlyn 6320, or 8120" (sold by Du Pont DE NEMOURS & COMPANY, USA), or "Himilan 1706, 1605, 1855, 1601, or 1557" (sold by Du Pont-Mitsui Polychemicals Co., Ltd.).

Another polymer such as a thermoplastic elastomer other than that described above may be added, as an arbitrary component, to the main material of each of the cover material and intermediate layer material. Examples of such polymers may include a polyamide based elastomer, a styrene based block elastomer, a hydrogenated polybutadiene, and an ethylene-vinyl acetate (EVA) copolymer.

A golf ball using the present rubber composition, which is generally applied to a two-piece solid golf ball or a multi-piece solid golf ball, can be produced in accordance with a known process. While not particularly limited, the two-piece solid golf ball can be produced by putting a solid core formed of the hot-molded product in a specific injection-molding mold, and injecting the above cover material thereon by a specific known manner, and the multi-piece solid golf ball can be produced by putting a solid core formed of the hot-molded product in a specific injection-molding mold and sequentially injecting the above intermediate layer and cover material thereon by a specific manner. Alternatively, the cover material is formed on the solid core by press-molding.

The thickness of the intermediate layer used for a multi-piece solid golf ball may be in a range of 0.5 mm or more, preferably, 1.0 mm or more, with the upper limit being in a range of 3.0 mm or less, preferably, 2.5 mm or less, more preferably, 2.0 mm or less, most preferably. 1.6 mm or less.

The thickness of the cover used for a two-piece solid golf ball or multi-piece solid golf ball may be in a range of 0.7 mm or more, preferably, 1.0 mm or more, with the upper limit being in a range of 3.0 mm or less, preferably, 2.5 mm or less, more preferably, 2.0 mm or less, most preferably, 1.6 mm or less.

The golf ball of the present invention can be produced with its diameter and weight specified under a golf rule for golf games. Concretely, the diameter of the golf ball can be set in a range of 42.67 mm or more, with the upper limit being in a range of 44.0 mm or less, preferably, 43.5 mm or less, more preferably, 43.0 mm or less, and the weight of the golf ball can be set in a range of 45.93 g or less, with the lower limit being in a range of 44.5 g or more, preferably, 45.0 g or more, more preferably, 45.1 g or more, most preferably, 45.2 g or more.

### EXAMPLE

The present invention will be more clearly understood by way of, while not limited thereto, the following examples and comparative examples.

### Examples 1 to 7 and Comparative Examples 1 to 7

A rubber composition for a solid core was prepared by adding core materials shown in Table 2 to 100 parts by mass of each of polybutadiene components obtained by mixing polybutadienes of the following kinds (1) to (8) having physical properties shown in Table 1 at each mixing ratio shown in Table 2, and a solid core was produced from the rubber composition. In Table 2, "Percumyl D" (sold by NOF CORPORATION) was used as dicumyl peroxide, and NOCRAK NS-6 (sold by Ouchi-Sinko Chemical Industrial Co., Ltd.) was used as an antioxidant.

### Kinds of Polybutadienes

(1) polybutadiene: "BR01" (sold by JSR Co., Ltd.)
(2) polybutadiene: "BR10" (sold by JSR Co., Ltd.)
(3) polybutadiene: "BR11" (sold by JSR Co., Ltd.)
(4) polybutadiene: "BR18" (sold by JSR Co., Ltd.)
(5) polybutadiene: "HCBN-11 (trial grade)" (sold by JSR Co., Ltd.)
(6) polybutadiene: "HCBN-12 (trial grade)" (sold by JSR Co., Ltd.)
(7) polybutadiene: "#9100081 (trial grade)" (sold by Firestone Co., Ltd.)
(8) polybutadiene: "UBE101" (sold by Ube Industries, Ltd.)

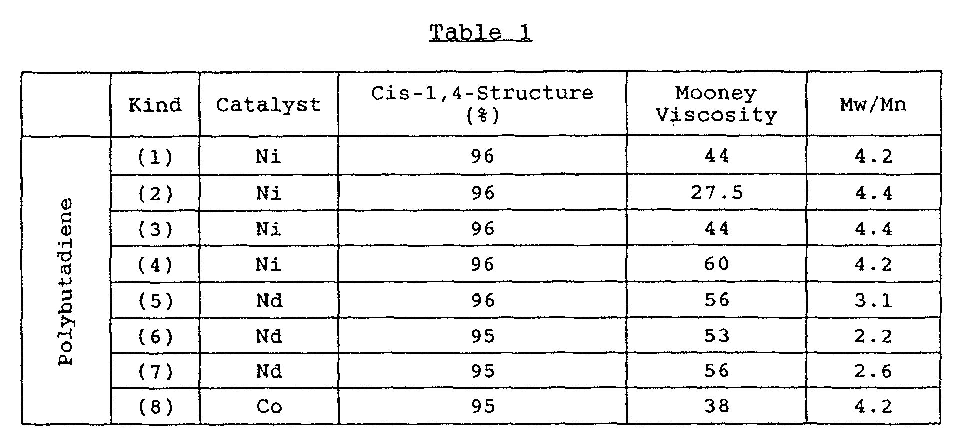

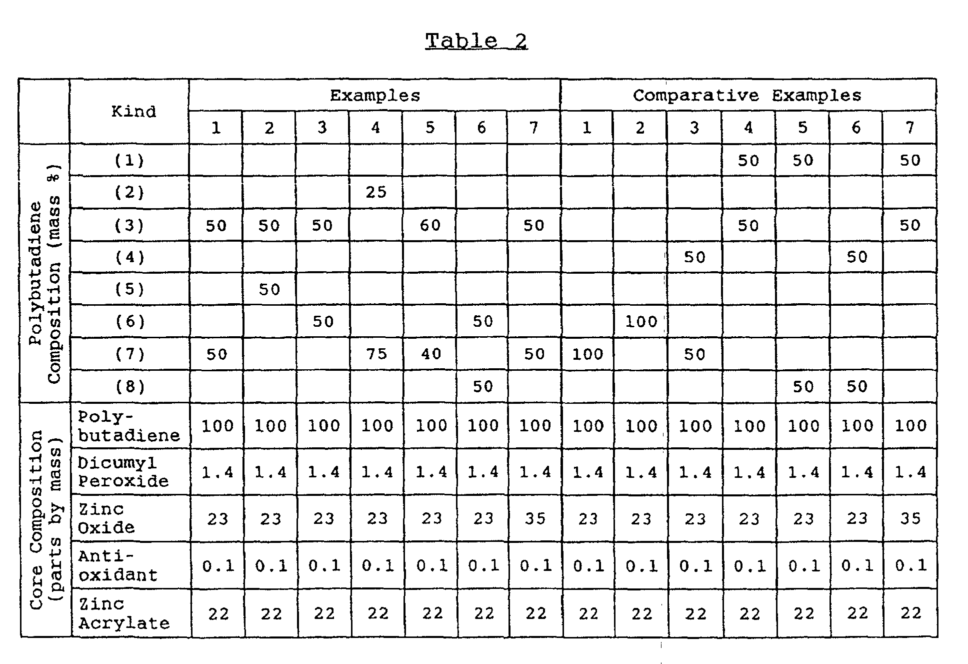

The rubber composition for a solid core was then suitably kneaded by a kneader or a roll, and the workability at the time of extruding a specific amount of the rubber composition was evaluated under the following criteria. The results are shown in Table 3.

### Evaluation of Workability in Extrusion

The surface and shape of a slug obtained by extruding the rubber composition were evaluated under the following criteria:
Grade 5: the workability in extrusion is very good and the slug surface is good.
Grade 4: the workability in extrusion is good and the slug surface is slightly rough.
Grade 3: the rubber composition is extrudable but scuffing occurs on the slug surface.
Grade 2: the rubber composition is extrudable but scuffing on the slug surface is very conspicuous.
Grade 1: A failure in shape of the slug occurs, and it is difficult to extrude a specific amount of the rubber composition.

In each of Examples 1 to 6 and Comparative Example 1 to 6, a solid core having a diameter of about 38.9 mm and a weight of about 36.0 g was produced by using the above rubber composition for a solid core, and in each of Example 7 and Comparative Example 7, a solid core having a diameter of 35.3 mm and a weight of 31.0 g was produced by using the above rubber composition.

The press-molding of the rubber composition was performed at 150°C for 20 min.

A deformed amount of the solid core thus obtained, measured by applying a load of 980 N (100 kg) thereto, was examined, and further the resilience of the solid core was examined as follows. The results are shown in Table 3.

### Flexural Amount (Load: 980 N)

A deformed amount (mm) of the solid core, measured by applying a load of 980 N (100 kg), between flat plates, was measured.

### Resilience

The initial velocity of a golf ball obtained by using the above solid core was measured by an initial velocity meter of the same type as that used in a certified institution USGA. For each of Examples 1 to 6 and Comparative Examples 1 to 6, the resilience was expressed by a differential initial velocity based on an initial velocity in Comparative Example 4. For Example 7, the resilience was expressed by a differential initial velocity based on an initial velocity of Comparative Example 7.

In each of Examples 1 to 6 and Comparative Examples 1 to 6, the solid core was put in a specific mold, and a cover material (Himilan 1601/Himilan 1557 = 50/50) was injection-molded thereon, to produce a two-piece solid golf ball having a diameter of 42.7 mm and a weight of 45.3 g. In each of Example 7 and Comparative Example 7, the solid core was put in the same specific mold as described above and an intermediate layer material (Himilan 1706/Himilan 1605 = 50/50) was injection-molded thereon, to produced an intermediate layer covered core having a diameter of about 38.7 mm, and then the intermediate layer covered core was shifted in a specific mold and a cover material (Himilan 1650/Surlyn 8120 = 50/50) was injection-molded thereon, to produce a three-piece solid golf ball having a diameter of about 42.7 mm and a weight of about 45.3 g.

The carrying performance of each of the golf balls thus obtained was examined. The results are shown in Table 3.

### Physical Properties of Golf Ball

Each golf ball was hit at a head speed of 45 m/s by a hitting machine on which a driver (W#1) was previously mounted, and the carry and total distance of the hit ball were measured.

As shown in Table 3, it was found that the golf ball of the present invention can be produced with good workability and exhibit excellent resilience.

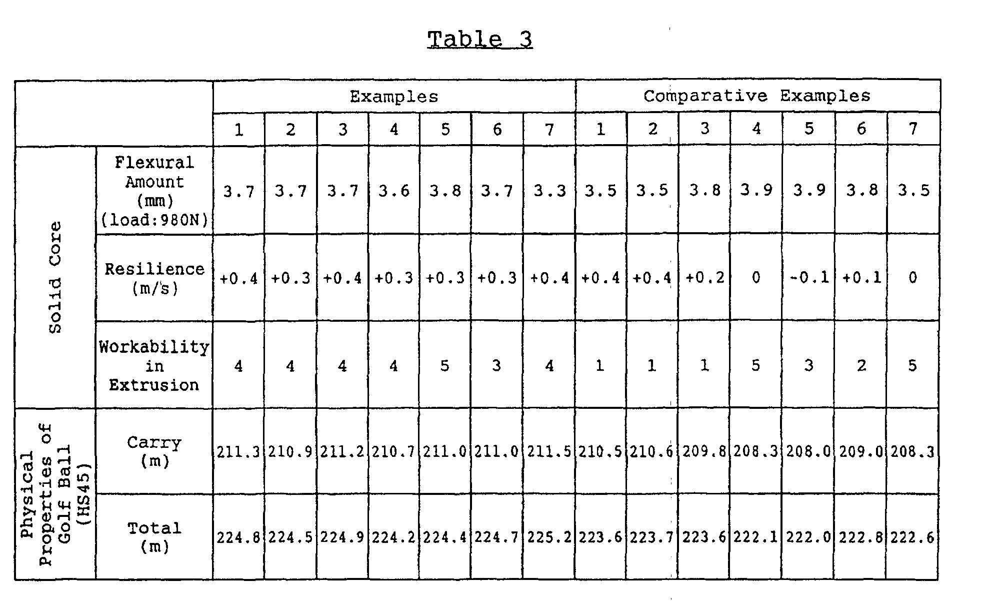

## Claims

1. A golf ball comprising a body hot-moulded from a rubber composition comprising;
a polybutadiene blend containing polybutadiene (a) mixed with polybutadiene (b) at a mass ratio [(a)/(b)] ranging from 70/30 to 10/90;
an unsaturated carboxylic acid and/or a metal salt thereof; and
an organic peroxide;
wherein said polybutadiene (a) contains 60% or more of cis-1,4-bonds and has a Mooney viscosity [ML₁₊₄(100° C)] of 10 to 48 and is synthesized by using a group VIII element catalyst, and said polybutadiene (b) contains 60% or more of cis-1,4-bonds and has a Mooney viscosity (ML₁₊₄(100°C)] of 50 or more, and is synthesized by using a rare earth element based catalyst.

2. A golf ball according to claim 1, wherein the Mooney viscosity [ML₁₊₄(100°C)] of the polybutadiene (a) is 46 or less.

3. A golf ball according to claim 2, wherein the Mooney viscosity [ML₁₊₄(100°C)] of the polybutadiene (a) is 44 or less.

4. A golf ball according to any one of claims 1 to 3, wherein the Mooney viscosity [ML₁₊₄(100°C)] of the polybutadiene (a) is 20 or more.

5. A golf ball according to claim 1, wherein said golf ball is either a one-piece golf ball consisting of said body or a golf ball in which said body constitutes a solid core or solid center, and a flexural amount of said one-piece solid golf ball, solid core, or solid center, measured by applying a load of 980 N (100kg) thereto, is in a range of 2.0 to 6.0 mm.

6. A golf ball according to claim 1 or 2 wherein letting a weigh-average molecular weight be Mw (x10⁴), a number-average molecular weight be Mn (x10⁴), and a ratio of the weight-average molecular weight to the number-average molecular weight be Mw/Mn, the ratio Mw/Mn of said component (a) is in a range of 3.0 to 6.0, and the Mw/Mn of said component (b) is in a range of 2.0 to 4.0.

7. A method of making a golf ball according to any one of claims 1 to 6 including the step of moulding the rubber composition to form said body.

8. A method according to claim 7 including the step of mixing said polybutadienes (a), (b).

## Patentansprüche

1. Golfball, umfassend einen Körper, der aus einer Kautschukzusammensetzung warmgeformt ist, die Folgendes umfasst:
eine Polybutadienmischung, worin Polybutadien (a) in einem Massenverhältnis [(a):(b)] im Bereich von 70:30 bis 10:90 mit Polybutadien (b) vermischt ist;
eine ungesättigte Carbonsäure und/oder eine Metallsalz davon; und
ein organisches Peroxid;
worin das Polybutadien (a) 60 % oder mehr cis-1,4-Bindungen enthält, eine Mooney-Viskosität [ML₁₊₄(100 °C)] von 10 bis 48 aufweist und unter Verwendung eines aus Elementen der Gruppe VIII ausgewählten Katalysators synthetisiert ist und das Polybutadien (b) 60 % oder mehr cis-1,4-Bindungen enthält, eine Mooney-Viskosität [ML₁₊₄(100 °C)] von 50 oder mehr aufweist und unter Verwendung eines Katalysators auf Basis eines Seltenerdmetalls synthetisiert ist.

2. Golfball nach Anspruch 1, worin die Mooney-Viskosität [ML₁₊₄(100 °C)] des Polybutadiens (a) 46 oder weniger beträgt.

3. Golfball nach Anspruch 2, worin die Mooney-Viskosität [ML₁₊₄(100 °C)] des Polybutadiens (a) 44 oder weniger beträgt.

4. Golfball nach einem der Ansprüche 1 bis 3, worin die Mooney-Viskosität [ML₁₊₄(100 °C)] des Polybutadiens (a) 20 oder mehr beträgt.

5. Golfball nach Anspruch 1, worin der Golfball entweder ein einteiliger Goifbaii ist, der aus dem Körper besteht, oder ein Golfball ist, bei dem der Körper einen festen Kern oder ein festes Zentrum darstellt, und das Nachgiebigkeitsausmaß des einteiligen festen Golfballs, des festen Kerns oder des festen Zentrums, gemessen durch Anlegen einer Last von 980 N (100 kg) daran, im Bereich von 2,0 bis 6,0 mm liegt.

6. Golfball nach Anspruch 1 oder 2, worin - bei einem gewichtsmittleren Molekulargewicht Mw (x 10⁴), einem zahlenmittleren Molekulargewicht Mn (x 10⁴) und einem Verhältnis von gewichtsmittlerem Molekulargewicht zu zahlenmittlerem Molekulargewicht Mw/Mn - das Verhältnis Mw:Mn der Komponente (a) im Bereich von 3,0 bis 6,0 liegt und das Verhältnis Mw:Mn der Komponente (b) im Bereich von 2,0 bis 4,0 liegt.

7. Verfahren zur Herstellung eines Golfballs nach einem der Ansprüche 1 bis 6, umfassend den Schritt des Formens der Kautschukzusammensetzung, um den Körper zu bilden.

8. Verfahren nach Anspruch 7, umfassend den Schritt des Vermischens der Polybutadiene (a) und (b).

## Revendications

1. Une balle de golf comprenant un corps moulé à chaud à partir d'une composition de caoutchouc comprenant:
un mélange de polybutadiène contenant du polybutadiène (a) mélangé avec du polybutadiène (b) à un rapport de masse [(a)/(b)] dans la gamme de 70/30 à 10/90;
un acide carboxylique insaturé et/ou un sel métallique de celui-ci; et
un peroxyde organique
où ledit polybutadiène (a) contient 60% ou plus de liaisons cis -1,4 et a une viscosité Mooney [ML₁₊₄(100°C)] de 10 à 48 et est synthétisé en utilisant un catalyseur d'un élément du groupe VIII, et où ledit polybutadiène (b) contient 60% ou plus de liaisons cis-1,4 et a une viscosité Mooney [ML₁₊₄(100°C)] de 50 ou davantage, et est synthétisé en utilisant un catalyseur à base d'éléments de terres rares.

2. Une balle de golf selon la revendication 1, dans laquelle la viscosité Mooney [ML₁₊₄(100°C)] du polybutadiène (a) est de 46 ou moins.

3. Une balle de golf selon la revendication 2, dans laquelle la viscosité Mooney [ML₁₊₄(100°C)] du polybutadiène (a) est de 44 ou moins.

4. Une balle de golf selon une quelconque des revendications 1 à 3, dans laquelle la viscosité Mooney [ML₁₊₄(100°C)] du polybutadiène (a) est de 20 ou plus.

5. Une balle de golf selon la revendication 1, dans laquelle ladite balle de golf est soit une balle de golf en une seule pièce composée dudit corps, soit une balle de golf dans laquelle ledit corps constitue un noyau plein ou une partie centrale pleine, et dans laquelle la valeur de flexion de ladite balle de g olf pleine en une seule pièce, dudit noyau plein, ou de ladite partie centrale pleine, mesurée en y appliquant une charge de 980 N (100 kg), est dans une gamme de 2,0 à 6,0 mm.

6. Une balle de golf selon la revendication 1 ou 2 dans laquelle, en considérant un poids moléculaire moyen en poids Mw (x10 ⁴), un poids moléculaire moyen en nombre Mn (x10⁴) et un rapport du poids moléculaire moyen en poids au poids moléculaire moyen en nombre Mw/Mn, le rapport Mw/Mn dudit composé (a) est dans une gamme de 3,0 à 6,0, et le Mw/Mn dudit composé (b) est dans une gamme de 2,0 à 4,0.

7. Un procédé de réalisation d'une balle de golf selon une quelconque des revendications 1 à 6 incluant l'étape consistant à mouler la composition de caoutchouc pour former ledit corps.

8. Un procédé selon la revendication 7 incluant l'étape consistant à mélanger lesdits polybutadiènes (a), (b).
